# EUROPÄISCHE PATENTSCHRIFT

(11) **EP 1 661 687 B1**
(45) Veröffentlichungstag und Bekanntmachung des Hinweises auf die Patenterteilung: **26.01.2011**
(21) Anmeldenummer: 05025941.5
(22) Anmeldetag: 29.11.2005
(51) Int. Cl.: B29C 47/22

(54) **Extrusionskopf mit Düsenspalteinstellung**
Extrusion die with die opening adjustment
Filière d'extrudeuse avec ajustement de l'ouverture de la filière

(30) Priorität: 30.11.2004 DE 102004057974
(43) Veröffentlichungstag der Anmeldung: 31.05.2006
(73) Patentinhaber: W. Müller GmbH, 53842 Troisdorf (DE)
(72) Erfinder: Lang, Klaus, 53797 Lohmar (DE)
(74) Vertreter: Müller, Thomas Michael

(56) Entgegenhaltungen:
- EP-A- 0 873 845
- CA-A1- 2 509 434
- DE-A1- 3 505 837
- DE-C2- 19 537 132
- PATENT ABSTRACTS OF JAPAN Bd. 009, Nr. 256 (M-421), 15. Oktober 1985 (1985-10-15) & JP 60 105520 A (HITACHI DENSEN KK), 11. Juni 1985 (1985-06-11)

## Beschreibung

Die Erfindung betrifft einen Extrusionskopf zur Herstellung von schlauchförmigen Formlingen aus extrudierbarem Kunststoffmaterial umfassend ein Gehäuse,
- das eine Achse bildet,
- das eine erste Bohrung aufweist, die eine erste Innenfläche bildet und auf der Achse zentriert ist,
   einen Düsenkopf ,
- der eine zweite Bohrung aufweist, die eine zweite Innenfläche bildet, welche an einem Düsenaustrittsende endet,
   eine Pinole,
- die sich in der ersten Bohrung des Gehäuses und in der zweiten Bohrung des Düsenkopfes entlang der Achse erstreckt,
- die eine Außenfläche aufweist und am Düsenaustrittsende endet,
- wobei zwischen der zweiten Innenfläche und der Außenfläche ein Spalt gebildet ist, durch den das Kunststoffmaterial zur Bildung des schlauchförmigen Formlings gefördert wird, welcher am Düsen-austrittsende aus dem Düsenkopf austritt,
   eine Gelenkanordnung,
- die aneinander geführte Kugelflächen, von denen eine einem ersten Lagerelement und die andere einem zweiten Lagerelement zugeordnet ist, welches mit dem Düsenkopf verbunden ist, umfasst und
- die den Düsenkopf mit dem Gehäuse allseitig schwenkbar und dicht verbindet,
   und
   einen Stellmechanismus,
- über den der Düsenkopf allseitig schwenkend verstellbar ist und
- der einen Stellhebel umfasst, der mit einem der Lagerelemente verbunden ist und eine bezüglich der Achse radial verlaufende Stellachse bildet, gemäβ den oberbegriff des Anpruchs 1.

Ein solcher Extrusionskopf ist aus der JP 60-105520 bekannt.

US 4 472 129 zeigt einen Extrusionskopf, bei dem ein Düsenkopf über Kugelflächen gelenkig gelagert ist. An den Düsenkopf greifen zwei Stellstangen an, die bezüglich einer Mittelachse des Extrusionskopfes diametral zueinander und parallel zur Mittelachse angeordnet sind. Die Stellstangen verlaufen in Bohrungen des Extrusionskopfes und ragen an einer Oberseite desselben heraus und sind dort über Stellzylinder axial verschiebbar angetrieben.

Die DE 35 05 83 7 A1 offenbart einen Extrusionskopf zur Herstellung von schlauchförmigen Formlingen aus extrudierbarem Kunststoffmaterial. Er umfasst ein Gehäuse, das eine Achse bildet. Das Gehäuse weist eine erste Bohrung auf, die eine erste Innenfläche bildet und auf der Achse zentriert ist. Der Extrusionskopf umfasst ferner einen Düsenkopf, der eine zweite Bohrung aufweist, die eine zweite Innenfläche bildet, welche an einem Düsenaustrittsende endet. Des weiteren umfasst der Extrusionskopf eine Pinole, die sich in der ersten Bohrung des Gehäuses und in der zweiten Bohrung des Düsenkopfes entlang der Achse erstreckt. Die Pinole weist eine Außenfläche auf und endet am Düsenaustrittsende. Zwischen der zweiten Innenfläche und der Außenfläche ist ein Spalt gebildet durch den das Kunststoffmaterial zur Bildung des schlauchförmigen Formlings gefördert wird, wobei der schlauchförmige Formling am Düsenaustrittsende aus dem Düsenkopf austritt. Zum Extrusionskopf gehört noch eine Gelenkanordnung, die aneinander geführte Kugelflächen umfasst. Die erste Kugelfläche ist einem ersten Lagerelement und die zweite einem zweiten Lagerelement zugeordnet.

Das zweite Lagerelement ist mit dem Düsenkopf verbunden. Das zweite Lagerelement wird mit seiner Kugelfläche in Anlage zur Kugelfläche des ersten Lagerelementes über eine Federanordnung gehalten. Es ist ein Stellenmechanismus vorgesehen, über den der Düsenkopf allseitig schwenkend verstellbar ist. Dieser Stellmechanismus sieht einen Stellmotor vor, dessen Antriebsachse parallel zur Achse des Extrusionskopfes verläuft. Der Motor dient zum Antrieb einer Exzenterwelle unter Zwischenschaltung eines Untersetzungsgetriebes. Am Ende dieser Welle ist ein exzentrisch zur Antriebsachse angeordneter Zapfen angebracht, der eine Rolle trägt. Diese Rolle stützt sich am Außenumfang des verlängerten zweiten Lagerelementes ab. Vier solcher Antriebe sind auf dem Umfang des zweiten Lagerelementes verteilt angeordnet, so dass eine allseitige Schwenkverstellung erfolgen kann.

Bei einer Schwenkverstellung, die vier auf dem Umfang verteilte Antriebe benötigt, ist der erforderlich Bauraum groß, so dass eine dichte Anordnung von Extrusionsköpfen in paralleler Anordnung nebeneinander nicht möglich ist. Darüber hinaus ist der Aufwand auch insofern groß, als insgesamt vier Antriebe erforderlich sind.

Die EP 0 873 845 B1 beschreibt einen Extrusionskopf zur Herstellung von schlauchförmigen Formlingen aus extrudierbarem Kunststoffmaterial. Der Extrusionskopf umfasst ein Gehäuse, das eine erste Achse bildet, auf der eine erste Bohrung, die eine erste Innenfläche bildet, zentriert angeordnet ist. Er umfasst ferner einen Düsenkopf, der eine zweite Bohrung aufweist, die eine zweite Innenfläche bildet, welche sich entlang der Achse an die erste Bohrung mit der ersten Innenfläche anschließt und an einem Düsenaustrittsende endet.

Durch die erste und die zweite Bohrung hindurch erstreckt sich eine Pinole entlang der Achse. Diese Pinole weist eine Außenfläche auf und endet am Düsenaustrittsende. Zwischen der zweiten Innenfläche des Düsenkopfes und der Außenfläche der Pinole ist ein Spalt gebildet, durch den Kunststoffmaterial zur Bildung des schlauchförmigen Formlings gefördert wird. Der Formling tritt am Düsenende aus dem Düsenkopf aus.

Dem Düsenkopf ist ein Stellmechanismus zugeordnet, der zwei radial vom Düsenkopf, bezogen auf die Achse, abstehende Stellantriebe umfasst. Diese beiden Stellantriebe sind in einem Winkel von 90° umfangsversetzt zueinander angeordnet. Der eine Stellantrieb wirkt unmittelbar auf den Düsenkopf ein und dient zur Verstellung in einer ersten Achsrichtung. Der zweite Stellantrieb wirkt unter Vermittlung eines Stellringes auf den Düsenkopf derart ein, dass eine Verstellung desselben in einer Richtung, die senkrecht zur ersten Stellrichtung steht, möglich ist. Hierdurch soll ein kreuzschlittenartiger Aufbau für die Verstellung erzielt werden. Der Düsenkopf wird dadurch mit seiner Innenfläche zu der zugehörigen Innenfläche der ersten Bohrung des Gehäuses in einer radialen Ebenen in zwei Achsen verstellbar, d.h. auch am Düsenaustrittsende erfolgt eine Verstellung parallel zu dieser Radialebene. Hierdurch entstehen Bereiche, in denen die zweite Innenfläche des Düsenkopfes über die erste Innenfläche der ersten Bohrung in den Spalt hinein vortritt bzw. aus diesem zurücktritt. Hierdurch erfolgt eine Störung des Flusses des Kunststoffmateriales im Spalt. Es erfordert die Anordnung der Stellantriebe in Radialebenen um 90° zueinander versetzt einen erheblichen Freiraum, was sich bezüglich des Stichmaßes mit dem mehrere solcher Extrusionsköpfe parallel nebeneinander angeordnet sind, negativ auswirkt. Das bedeutet, dass auf eine vorgegebene Länge nur eine geringere Anzahl von Extrusionsköpfen angeordnet werden kann, weil diese einen Mindestabstand zueinander aufweisen müssen.

Der Erfindung liegt die Aufgabe zugrunde einen Extrusionskopf zu schaffen, der eine Verstellung zur Einstellung des Spaltes über den Umfang erlaubt, wobei der Einfluss auf das Fließverhalten des Kunststoffmaterials gering ist und darüber hinaus mehrere Extrusionsköpfe auf möglichst kleinem Raum nebeneinander angeordnet werden können.

Gelöst wird diese Aufgabe erfindungsgemäß dadurch, dass der Stellmechanismus zwei Linearstellantriebe umfasst, die entlang Kraftwirkungslinien am Stellhebel angreifen, welche parallel zur Achse verlaufen, so dass die Linearstellantriebe entgegengesetzt von der Stellachse versetzt und unter einem Winkel am Stellhebel angreifen, wobei die Linearstellantriebe parallel und unmittelbar nebeneinander angeordnet sind, gemäß dem kennzeichnenden Teil des Anpruchs 1.

Von Vorteil bei dieser Ausbildung ist, dass die allseitig schwenkbare Anordnung des Düsenkopfes zum Gehäuse insgesamt eine günstige Anordnung des Stellmechanismus erlaubt, weil die Stellantriebe, wenn sie als Linearantriebe gestaltet sind, so angeordnet werden können, dass die Kraftübertragung in einer Richtung parallel zu einer Achse der Pinole bzw. der ersten Bohrung im Gehäuse erfolgt. Darüber hinaus können, weil zwei Antriebe vorgesehen sind, diese Antriebe, die eine allseitige Schwenkung erlauben, unmittelbar nebeneinander parallel angeordnet sein, so dass sie von der Achse weg zu einer Seite hin versetzt angeordnet sein können und dabei mit ihrer Kraftwirkungslinie parallel zur Achse. Dadurch wird Freiraum in der Radialebene geschaffen und zwar zumindest so, dass dann, wenn mehrere Extrusionsköpfe vorzusehen sind, diese weitestgehend dicht aneinander angrenzend angeordnet sein können. Ein weiterer Vorteil besteht darin, dass aufgrund der Anordnung der Kugelflächen entlang der Achse entfernt vom Düsenaustrittsende der Verschwenkungsweg am Düsenaustrittsende für die Spalteinstellung größer ist als im Bereich der aufeinanderliegenden Flächen der Gelenkanordnung in Form der Kugelflächen, so dass praktisch keine Toträume entstehen, die das Fließverhalten des Kunststoffmaterials im Spalt zwischen Pinole und Innenfläche negativ beeinflussen. Vorzugweise ist zwischen der Stellachse des Stellhebels und der Wirklinie des Linearstellantriebes ein Winkel von etwa 90° vorgesehen. Obwohl zwei Linearstellantriebe parallel unmittelbar nebeneinander vorgesehen sind, ist durch die Anordnung eine allseitige Schwenkverstellung möglich.

In Ausgestaltung der Erfindung ist vorgesehen, dass die Gelenkanordnung
- ein ringförmiges erstes Lagerelement mit einer Atißenkugelfläche an einer Stirnseite aufweist,
- ein zweites Lagerelement mit einer zur Außenkugelfläche passenden Innenkugelfläche aufweist, an der sie allseitig schwenkbar geführt ist und mit dem Düsenkopf verbunden ist,
- einen Halter aufweist,
- der das zweite Lagerelement mit seiner Innenkugelfläche in Anlage zur Auβenkugelfläche des ersten Lagerelements dicht und allseitig schwenkbar hält.

Die Abdichtung ist über die aneinanderliegenden Kugelflächen gewährleistet.

Der Mittelpunkt der Außenkugelfläche und der Innenkugelfläche ist auf der Achse vom Düsenaustrittsende und den Außenkugelflächen bzw. Innenkugelfläche weg versetzt angeordnet. Dabei ist der durch die Außenkugelfläche und die Innenkugelfläche gebildete Radius kleiner als der Radius, um den das Düsenaustrittsende schwenkt.

Für die Halterung ist vorgesehen,
dass das zweite Lagerelement eine konzentrisch zur Innenkugelfläche angeordnete kugelige Außenfläche aufweist und
dass der Halter eine zur kugeligen Außenfläche passende kugelige Innenfläche aufweist. Vorzugsweise ist der Halter am Tragelement festgelegt.

Günstig ist, wenn die beiden Linearstellantriebe als doppelwirkende Hydraulikzylinder ausgebildet sind. Diese können beispielsweise mit dem Stellhebel über ein Kugelauge verbunden sein, so dass keine Zwängungen auftreten. Es sind aber auch andere hilfskraftbetriebene oder von Hand betreibbare Linearstellantriebe einsetzbar.

Ein bevorzugtes Ausführungsbeispiel der Erfindung ist in der Zeichnung schematisch dargestellt.

Es zeigt
- Figur 1: eine Ansicht eines Extrusionskopfes teilweise im Vertikalschnitt entlang der Achse und
- Figur 2: eine Ansicht in Pfeilrichtung X von Figur 1.

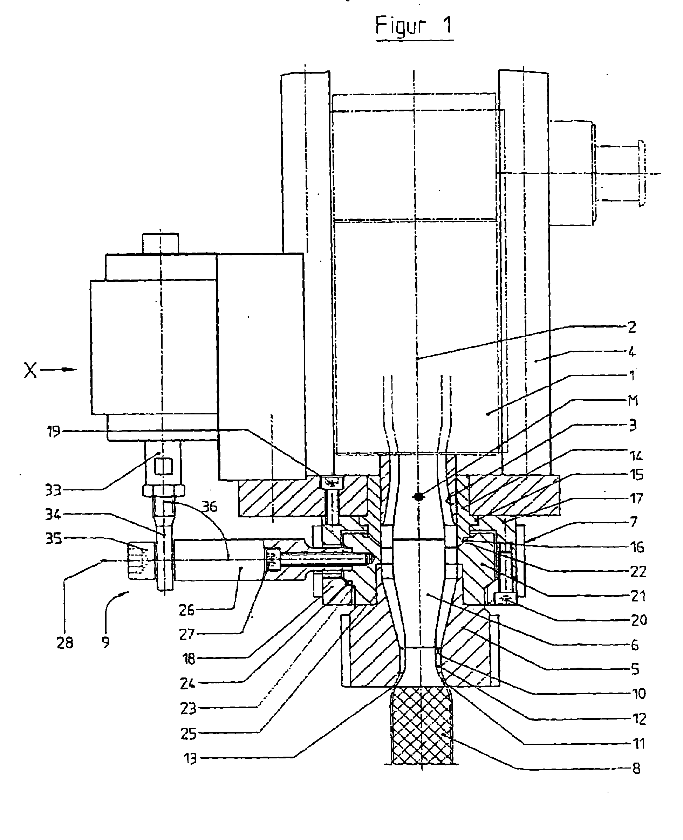

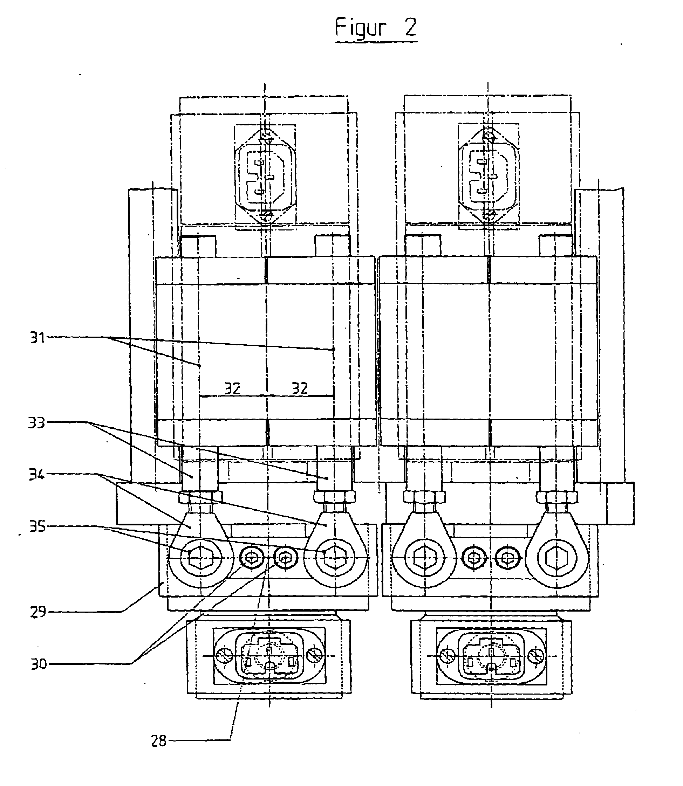

Nachfolgend wird der erfindungsgemäße Extrusionskopf anhand der Figuren 1 und 2 näher beschrieben. Der Extrusionskopf umfasst ein Gehäuse 1, dass die Achse 2 bildet. Das Gehäuse 1 wird von einem Tragelement 4 gehalten. Durch das Gehäuse 1 verläuft entlang der Achse 2 eine erste Bohrung, die eine erste Innenfläche 3 bildet. An das Gehäuse 1 ist ein Düsenkopf 5 mittels einer Gelenkanordnung 7 angeschlossen. Durch das Gehäuse 1 und den Düsenkopf 5 hindurch erstreckt sich eine Pinole 6. Zwischen der Pinole 6 und dem Düsenkopf bzw. der ersten Innenfläche wird ein Ringkanal gebildet, in dem extrudiertes Kunststoffmaterial fließt und am Ende in Form eines Formlings 8 austritt. Der Düsenkopf 5 und das Gehäuse 1 sind über die Gelenkanordnung 7 so miteinander verbunden, dass über einen Stellmechanismus 9 eine Schwenkverstellung des Düsenkopfes 5 zum Gehäuse 1 bewirkt wird.

Der Düsenkopf 5 weist eine zweite Bohrung mit einer zweiten Innenfläche 10 auf, welche mit radialem Abstand zur Außenfläche 11 der Pinole 6 angeordnet ist, so dass zwischen beiden ein Spalt 12 am Austrittsende 13 gegeben ist, aus welchem der Formling 8 austritt. Die zweite Bohrung folgt unter Zwischenschaltung einer Bohrung im Bereich der Bauteile der Gelenkanordnung 7 auf die erste Bohrung im Gehäuse 1.

Die Gelenkanordnung 7 umfasst ein erstes Lagerelement 14 mit einem Ringansatz 15 und an der zum Düsenaustrittsende 13 hinweisenden Stirnfläche mit einer Auβenkugelfläche 16. Der Mittelpunkt der Außenkugelfläche 16 liegt auf der Achse 2 und ist mit M bezeichnet. Zur Festlegung am Gehäuse 1 dient ein Halter, der einen ersten Haltering 17 und einen zweiten Haltering 18 umfasst. Der erste Haltering 17 übergreift den Ringansatz 15 des ersten Lagerelementes 14 und ist durch Schrauben 19 am Tragelement 4 bzw. einer Querplatte desselben festgelegt.

Der zweite Haltering 18 dient zur Fixierung eines zweiten Lagerelementes 21, welches eine Innenkugelfläche 22 aufweist. Diese Innenkugelfläche 22 ist passend zur Außenkugelfläche 16 des ersten Lagerelementes 14 ausgebildet und liegt an dieser an. Zur Halterung weist das zweite Lagerelement 21 eine kugelige Außenfläche 23 auf, die ebenso wie die Innenkugelfläche 22 und die Außenkugelfläche 16 den Mittelpunkt M aufweist. An der kugeligen Außenfläche 23 liegt eine kugelige Innenfläche 24 des zweiten Halteringes 18 an. Der zweite Haltering 18 ist durch Schrauben 20 mit dem ersten Haltering 17 verbunden. Das erste Lagerelement 14, das zweite Lagerelement 21 und der erste Haltering 17 und der zweite Haltering 18, die zusammen den Halter bilden, gehören zur Gelenkanordnung 7. Der Düsenkopf 5 ist mittels Schrauben mit dem zweiten Lagerelement 21 fest verbunden. Die erste Innenfläche 3 und die zweite Innenfläche 10 setzen sich teilweise in das erste Lagerelement 14 und das zweite Lagerelement 21 fort und bilden zusammen einen Ringkanal um die Außenfläche 11 der Pinole 6 herum, welcher am Düsenaustrittsende 13, d.h. im Bereich der Stirnfläche von Düsenkopf 5 und Pinole 6 in Form eines ringförmigen Spaltes um die Achse 2 endet, wobei aus diesem Spalt 12 am Düsenaustrittsende 13 der Formling 8, bestehend aus dem in dem Ringkanal geförderten Kunststoffmaterial, austritt.

Toleranzen können dazu führen, dass der Spalt 12 auf dem Umfang um die Achse 2 nicht gleichmäßig ist oder auch nicht gleichmäßig sein soll, um beispielsweise partiell Verdickungen zu erzeugen. Aus diesem Grunde ist die Gelenkanordnung 7 vorgesehen, die ein Verschwenken des Düsenkopfes 5 im Verhältnis zu der ortsfesten Pinole 6 ermöglicht. Dabei kann dieses Verschwenken aufgrund der kugeligen Ausgestaltung der Lagerflächen, nämlich der Außenkugelfläche 16 und Innenkugelfläche 22 der beiden Lagerelemente 14, 21 allseitig erfolgen. Um diese Schwenkbewegung ausführen zu können, ist der Verstellmechanismus 9 vorgesehen. Dieser Verstellmechanismus 9 umfasst einen Stellhebel 26, der radial bezogen auf die Achse 2, vorstehend am zweiten Lagerelement 21 angebracht ist, wodurch die Stellachse 28 gebildet ist. Der Stellhebel 26 weist am Ende eine Traverse 29 auf. Er ist durch Schrauben 27 mit dem zweiten Lagerelement 21 fest verbunden. An der Traverse 29 greifen Linearstellantriebe 33, beispielsweise in Form von Hydraulikzylindern, die doppelt wirkend gestaltet sind, an. Es sind zwei Linearstellantriebe 33 vorgesehen, die mit dem Versatz 32 entgegengesetzt von der Stellachse 28 an der Traverse 29 angreifen, wobei ein jedem Linearstellantrieb 33 zugeordnetes Anschlussauge 34 über jeweils eine Schraube 35 an der Traverse 29 festgelegt ist.

Die Linearstellantriebe 33 bewirken eine Krafteinwirkung entlang der Wirklinien 31, die parallel zur Achse 2 verlaufen. Die Linearstellantriebe 33 sind mit dem Traggestell 4 verbunden. Die Wirklinien 31 wirken unter dem Winkel 36 im Verhältnis zur der Stellachse 28, wobei dieser Winkel bei Betätigung vergrößert oder verkleinert wird.

Die Funktion ist wie folgt:
Beide Stellantriebe 33, beispielsweise in Form von doppelt wirkenden Hydraulikzylindern, können gleichzeitig gleichgerichtet oder entgegengesetzt oder nur einer gerichtet betätigt werden, so dass entweder beide zusammen und im gleichen Maße ein-oder ausfahren und damit den Düsenkopf 5 im rechts- oder linksschwenkenden Sinne bezogen auf die Zeichenebene von Figur 1 um den Mittelpunkt M verschwenken, so dass entweder die Verkleinerung und entsprechend gegenläufige Veränderung des Spaltes 12 am Düsenaustrittsende 13 erfolgt. Alternativ kann Betätigung nur eines oder durch eine gegenläufige Bewegung der beiden Linearstellantriebe 33 aufgrund des Versatzes 32 eine Schwenkbewegung um die Stellachse 28 eingeleitet werden, so dass der Düsenkopf 5 bezogen auf die Zeichenebene von Figur 1 in die Zeichenblattebene hinein oder aus dieser herausbewegt wird.

Es sind aber auch Stellbewegungen zu Positionen in Zwischenebenen möglich, indem die Stellwege der beiden Linearstellantriebe 33 bei gleich- oder gegenläufiger Bewegung unterschiedlich bemessen sind. Hierdurch werden sämtliche Zwischenpunkte über den Umfang der zweiten Bohrung am Düsenaustrittsende 13 erreicht, d.h. die zweite Innenfläche in der zweiten Bohrung des Düsenkopfes 5 nähert sich der Außenfläche 11 der Pinole 6 im Bereich des Düsenaustrittsendes 13 an einen beliebigen Punkt des Umfanges um die Achse 2 näher an und entfernt sich jeweils auf der entsprechenden diametral angeordneten Seite.

Es wird eine einfache Steuerungsmöglichkeit über die allseitige Schwenkbarkeit erreicht. Die Anordnung erlaubt schnelle Verstellungen, so dass selbst dann, wenn nur partiell in Längsrichtung des Formlings 8 eine Verdickung der Wandstärke erreicht werden soll, dies an beliebiger Stelle durch den Stellmechanismus in Verbindung mit der Gelenkanordnung erzielbar ist, wenn eine entsprechende Steuerung vorgesehen ist, die die Betätigung der Linearstellantriebe 33 bewirkt. Solche partielle Veränderung, beispielsweise Verdickung, kann günstig sein für Formlinge 8, die zu Rohrkrümmern oder gebogenen Hohlkörpern weiterverarbeitet werden, so dass aufgrund der Stauchung auf der Innenseite keine übermäßige Wanddickenvergrößerung und auf der Außenseite keine übermäßige Streckung und damit Wanddickenverringerung erfolgt. Es lassen sich annähernd gleiche Wanddicken erzielen.

### Bezugszeichenliste

- 1: Gehäuse
- 2: Achse
- 3: erste Innenfläche
- 4: Trageelement
- 5: Düsenkopf
- 6: Pinole
- 7: Gelenkanordnung
- 8: Formling
- 9: Stellmechanismus
- 10: zweite Innenfläche
- 11: Außenfläche
- 12: Spalt
- 13: Düsenaustrittsende
- 14: erstes Lagerelement
- 15: Ringansatz
- 16: Außenkugelfläche
- 17: erste Haltering
- 18: zweiter Haltering
- 19: Schraube
- 20: Schraube
- 21: zweites Lagerelement
- 22: Innenkugelfläche
- 23: kugelige Außenfläche
- 24: kugelige Innenfläche
- 25: Aufnahmebohrung
- 26: Stellhebel
- 27: Schraube
- 28: Stellachse
- 29: Traverse
- 30: Schraube
- 31: Wirklinie
- 32: Versatz
- 33: Linearstellantrieb
- 34: Anschlussauge
- 35: Schraube
- 36: Winkel
- M: Mittelpunkt

## Patentansprüche

1. Extrusionskopf zur Herstellung von schlauchförmigen Formlingen (8) aus extrudierbarem Kunststoffmaterial umfassend
ein Gehäuse (1),
- das eine Achse (2) bildet,
- das eine erste Bohrung aufweist, die eine erste Innenfläche (3) bildet und auf der Achse (2) zentriert ist,
einen Düsenkopf (5),
- der eine zweite Bohrung aufweist, die eine zweite Innenfläche (10) bildet, welche an einem Düsenaustrittsende (13) endet,
eine Pinole (6),
- die sich in der ersten Bohrung des Gehäuses (1) und in der zweiten Bohrung des Düsenkopfes (5) entlang der Achse (2) erstreckt,
- die eine Außenfläche (11) aufweist und am Düsenaustrittsende (13) endet,
- wobei zwischen der zweiten Innenfläche (10) und der Außenfläche (11) ein Spalt (12) gebildet ist, durch den das Kunststoffmaterial zur Bildung des schlauchförmigen Formlings (8) gefördert wird, welcher am Düsenaustrittsende (13) aus dem Düsenkopf (5) austritt, eine Gelenkanordnung (7),
- die aneinander geführte Kugelflächen (23, 24), von denen eine einem ersten Lagerelement (14) und die andere einem zweiten Lagerelemet (21) zugeordnet ist, welches mit dem Düsenkopf (5) verbunden ist, umfasst und
- die den Düsenkopf (5) mit dem Gehäuse (1) allseitig schwenkbar und dicht verbindet,
einen Stellmechanismus (9),
- über den der Düsenkopf (5) allseitig schwenkend verstellbar ist und
- der einen Stellhebel (26) umfasst, der mit dem zweiten Lagerelement (21) verbunden ist und eine bezüglich der Achse (2) radial verlaufende Stellachse (28) bildet,
**dadurch gekennzeichnet,**
**dass** der Stellmechanismus (9) zwei Linearstellantriebe (33) umfasst, die entlang Kraftwirkungslinien (31) am Stellhebel (26) angreifen, welche parallel zur Achse (2) verlaufen, so dass die Linearstellantriebe (33) entgegengesetzt von der Stellachse (28) versetzt und unter einem Winkel (36) am Stellhebel (26) angreifen, wobei die Linearstellantriebe (33) parallel und unmittelbar nebeneinander angeordnet sind.

2. Extrusionskopf nach Anspruch 1,
**dadurch gekennzeichnet,**
**dass** die Gelenkanordnung (7)
- ein ringförmiges erstes Lagerelement (14) mit einer Außenkugelfläche (16) an einer Stirnseite aufweist,
- ein zweites Lagerelement (21) mit einer zur Außenkugelfläche (16) passenden Innenkugelfläche (22) aufweist, an der sie allseitig schwenkbar geführt ist und mit dem Düsenkopf (5) verbunden ist,
- einen Halter (17,18) aufweist,
der das zweite Lagerelement (21) mit seiner Innenkugelfläche (22) in Anlage zur Außenkugelfläche (16) des ersten Lagerelements (14) dicht und allseitig schwenkbar hält.

3. Extrusionskopf nach Anspruch 2,
**dadurch gekennzeichnet,**
**dass** das zweite Lagerelement (21) eine konzentrisch zur Innenkugelfläche (22) angeordnete kugelige Außenfläche (23) aufweist und
**dass** der Halter (17, 18) eine zur kugeligen Außenfläche (23) passende kugelige Innenfläche (24) aufweist.

4. Extrusionskopf nach Anspruch 2,
**dadurch gekennzeichnet,**
**dass** der Halter (17, 18) am Trageelement (4) festgelegt ist.

5. Extrusionskopf nach Anspruch 1
**dadurch gekennzeichnet,**
**dass** die Linearstellantriebe (33) als doppelwirkende Hydraulikzylinder ausgebildet sind.

## Claims

1. Extrusion head for manufacturing a tubular moulding blank (8) made from extrudable plastic material comprising
a housing (1),
- which forms an axis (2),
- which has a first bore, which forms a first inner face (3) and which is centred on the axis (2),
a die head (5),
- which has a second bore, which forms a second inner face (10), which ends at a die outlet end (13),
a mandrel (6),
- which extends in the first bore of the housing (1) and in the second bore of the die head (5) along the axis (2),
- which has an outer face (11) and ends at the die outlet end (13),
- wherein between the second inner face (10) and the outer face (11) a gap (12) is formed, through which the plastic material is delivered for forming the tubular moulding blank (8), which exits at the die outlet end (13) from the die head (5),
a joint arrangement (7),
- which comprises spherical faces (23, 24), guided on each other, of which one is assigned to a first bearing element (14) and the other is assigned to a second bearing element (21), which is connected to the die head (5) and
- which connects pivotably in all directions and in a sealed manner the die head (5) to the housing (1),
a setting mechanism (9),
- by means of which the die head (5) is pivotably adjustable in all directions and
- which comprises a setting lever (26), which is connected to the second bearing element (21) and forms a setting axis (28) extending radially relative to the axis (2),
**characterised in**
**that** the setting mechanism (9) comprises two linear drives (33), which engage along force action lines (31) on the setting lever (26), which extend parallel to the axis (2), so that the linear drives (33) are off-set in opposite directions to the setting axis (28) and engage at an angle (36) on the setting lever (26), wherein the linear drives (33) are arranged parallel and directly next to each other.

2. Extrusion head according to claim 1,
**characterised in**
**that** the joint arrangement (7)
- has an annular first bearing element (14) with an outer spherical face (16) at one end face,
- has a second bearing element (21) with an inner spherical face (22), fitting to the outer spherical face (16), and on which it is pivotably guided in all directions and is connected to the die head (5),
- has a holder (17, 18),
which holds in a sealed manner and pivotably in all directions the second bearing element (21) with its inner spherical face (22) in abutment to the outer spherical face (16) of the first bearing element (14).

3. Extrusion head according to claim 2,
**characterised in**
**that** the second bearing element (21) has a spherical outer face (23) arranged concentrically to the inner spherical surface (22) and
**that** the holder (17, 18) has a spherical inner face (24) fitting to the spherical outer face (23).

4. Extrusion head according to claim 2,
**characterised in**
**that** the holder (17, 18) is retained on the support element (4).

5. Extrusion head according to claim 1,
**characterised in**
**that** the linear drives (33) are formed as double acting hydraulic cylinders.

## Revendications

1. Filière d'extrudeuse pour la fabrication d'ébauches (8) en forme de tuyau souple à partir d'une matière plastique extrudable comprenant un logement (1),
- qui forme un axe (2),
- qui présente un premier alésage, qui forme une première surface intérieure (3) et est centré sur l'axe (2),
une tête de filière (5),
- qui présente un deuxième alésage, qui forme une deuxième surface intérieure (10), laquelle aboutit à une extrémité de sortie de filière (13),
un fourreau (6),
- qui s'étend dans le premier alésage du logement (1) et dans le deuxième alésage de la tête de filière (5) le long de l'axe (2),
- qui présente une surface extérieure (11) et aboutit à une extrémité de sortie de filière (13),
- dans laquelle entre la deuxième surface intérieure (10) et la surface extérieure (11) une ouverture (12) est formée, à travers laquelle la matière plastique est transportée pour former l'ébauche (8) en forme de tuyau souple, qui ressort de la tête de filière (5) à l'extrémité de sortie de filière (13),
un agencement de joint articulé (7),
- qui comprend des surfaces de bille (23, 24) guidées l'une sur l'autre, desquelles une est coordonnée à un premier élément de palier (14) et l'autre est coordonnée à un deuxième élément de palier (21), qui est relié à la tête de filière (5) et
- qui relie de manière étanche et basculable de tous les côtés la tête de filière (5) au logement (1),
un mécanisme de manoeuvre (9),
- par l'intermédiaire duquel la tête de filière (5) peut être déplacée de manière basculante de tous les côtés et
- qui comprend un levier de manoeuvre (26), qui est relié au deuxième élément de palier (21) et forme un axe de manoeuvre (28) s'étendant radialement par rapport à l'axe (2), **caractérisé en ce que**,
le mécanisme de manoeuvre (9) comprend deux actionneurs linéaires (33), qui viennent en prise avec le levier de manoeuvre (26) le long de lignes d'action de forces (31), qui s'étendent parallèlement à l'axe (2), de sorte que les actionneurs linéaires (33) viennent en prise avec le levier de manoeuvre (26) en formant un angle (36) et en décalage par l'axe de manoeuvre (28) en sens opposé, dans laquelle les actionneurs linéaires (33) sont disposés parallèlement et directement à côté les uns des autres.

2. Filière d'extrudeuse selon la revendication 1,
**caractérisée en ce que**,
l'agencement de joint articulé (7)
- présente un premier élément de palier (14) annulaire avec une surface de bille extérieure (16) sur un côté frontal,
- présente un deuxième élément de palier (21) avec une surface de bille intérieure (22) s'ajustant à la surface de bille extérieure (16), sur laquelle elle est guidée de manière basculable de tous les côtés et est reliée à la tête de filière (5),
- présente une console (17, 18),
qui maintient le deuxième élément de palier (21) avec sa surface de bille intérieure (22) de sorte qu'il vienne repose sur la surface de bille extérieure (16) du premier élément de palier (14) de manière étanche et basculante de tous les côtés.

3. Filière d'extrudeuse selon la revendication 2,
**caractérisée en ce que**,
le deuxième élément de palier (21) présente une surface extérieure (23) sphérique disposée concentriquement par rapport à la surface de bille intérieure (22) et
la console (17, 18) présente une surface intérieure (24) sphérique s'ajustant à la surface extérieure sphérique (23).

4. Filière d'extrudeuse selon la revendication 2,
**caractérisée en ce que**
la console (17, 18) est immobilisée sur l'élément porteur (4).

5. Filière d'extrudeuse selon la revendication 1,
**caractérisée en ce que**,
les actionneurs linéaires (33) sont réalisés comme des cylindres hydrauliques à double action.
